(19) Europäisches Patentamt
European Patent Office
Office européen des brevets

(11) **EP 4 398 332 B1**

(12) **EUROPEAN PATENT SPECIFICATION**

(45) Date of publication and mention
of the grant of the patent:
**21.01.2026 Bulletin 2026/04**

(21) Application number: **22864145.2**

(22) Date of filing: **02.08.2022**

(51) International Patent Classification (IPC):
*H01M 4/133* (2010.01)   *H01M 4/02* (2006.01)
*H01M 4/36* (2006.01)   *H01M 4/587* (2010.01)
*H01M 4/04* (2006.01)   *H01M 4/48* (2010.01)
*H01M 10/0525* (2010.01)

(52) Cooperative Patent Classification (CPC):
**H01M 10/0525; H01M 4/0404; H01M 4/133;
H01M 4/366; H01M 4/483; H01M 4/587;**
H01M 2004/021; Y02E 60/10

(86) International application number:
**PCT/JP2022/029600**

(87) International publication number:
**WO 2023/032558 (09.03.2023 Gazette 2023/10)**

(54) **NEGATIVE ELECTRODE FOR SECONDARY BATTERY, AND SECONDARY BATTERY**

NEGATIVELEKTRODE FÜR SEKUNDÄRBATTERIE UND SEKUNDÄRBATTERIE

ÉLECTRODE NÉGATIVE POUR BATTERIE RECHARGEABLE, ET BATTERIE RECHARGEABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2021 JP 2021140821**

(43) Date of publication of application:
**10.07.2024 Bulletin 2024/28**

(73) Proprietors:
• **Panasonic Holdings Corporation
Osaka 571-8501 (JP)**
• **Panasonic Energy Co., Ltd.
Osaka 570-8511 (JP)**

(72) Inventors:
• **OURA, Yuji
Kadoma-shi, Osaka 571-0057 (JP)**
• **TASHITA, Takamitsu
Kadoma-shi, Osaka 571-0057 (JP)**
• **KATOGI, Akihiro
Kadoma-shi, Osaka 571-0057 (JP)**

(74) Representative: **Novagraaf International SA
Chemin de l'Echo 3
1213 Onex, Geneva (CH)**

(56) References cited:
WO-A1-2020/213499     JP-A- 2013 077 391
JP-A- 2014 143 152     JP-A- 2015 018 663
JP-A- 2019 106 271     US-A1- 2014 186 702
US-A1- 2014 287 316     US-A1- 2021 159 489
US-A1- 2021 202 932

## Description

TECHNICAL FIELD

The present disclosure generally relates to a negative electrode for a secondary battery, and a secondary battery using the negative electrode.

BACKGROUND ART

In recent years, secondary batteries such as lithium-ion batteries have been widely applied for on-board use represented by electric vehicles. Performance required for the secondary battery for on-board use includes high energy density and quick-charging ability. Specifically, establishment of quick-charging technology comparable to fuel-feeding time for gasoline-powered vehicles is desired, but the quick-charging ability is typically inconsistent with the energy density. Thus, it is not easy to achieve both of the energy density and the quick-charging ability.

Since a negative electrode, which is a main constituent of the battery, significantly affects the battery performance such as the energy density and the quick-charging ability, many investigations have been made on the negative electrode. For example, Patent Literatures 1 to 4 propose a negative electrode comprising: a core; and a mixture layer provided on the core, wherein layered structures are changed on a core side and a surface side of the mixture layer. The mixture layer of the negative electrode disclosed in Patent Literatures 1 to 4 has a bilayer structure having different types, content rates, and the like of a negative electrode active material, for example.

CITATION LIST

PATENT LITERATURE

PATENT LITERATURE 1: Japanese Unexamined Patent Application Publication No. 2015-146272
PATENT LITERATURE 2: International Publication No. WO 2013/018182
PATENT LITERATURE 3: International Publication No. WO 2020/218083
PATENT LITERATURE 4: International Publication No. WO 2020/213499

SUMMARY

TECHNICAL PROBLEM

As noted above, although improvement of the quick-charging ability of the secondary battery is an important object, focusing on the quick-charging ability typically decreases the energy density of the battery. It is an advantage of the present disclosure to provide a negative electrode that contributes to achievement of both of high energy density and excellent quick-charging ability of the secondary battery. The art disclosed in the above Patent Literatures still has a room for improvement of both of the achievement of the energy density and the quick-charging ability.

SOLUTION TO PROBLEM

A negative electrode for a secondary battery of an aspect of the present disclosure is a negative electrode for a secondary battery comprising: a core; and a mixture layer provided on the core, wherein the mixture layer contains graphite particles, and has a lower layer that is disposed on a side of the core of the mixture layer, and an upper layer that is disposed on a surface of the mixture layer, a median diameter on a volumetric basis of the graphite particles contained in the lower layer is greater than 10 $\mu$m, a median diameter on a volumetric basis of the graphite particles contained in the upper layer is greater than or equal to 4 $\mu$m and less than or equal to 10 $\mu$m, and an average thickness of the upper layer is less than or equal to 5% of an average thickness of the mixture layer.

A negative electrode for a secondary battery of another aspect of the present disclosure is a negative electrode for a secondary battery comprising: a core; and a mixture layer provided on the core, wherein the mixture layer contains graphite particles, and has a lower layer that is disposed on a side of the core of the mixture layer, and an upper layer that is disposed on a surface of the mixture layer, a BET specific surface area of the graphite particles contained in the lower layer is greater than 4.0 $m^2$/g, a BET specific surface area of the graphite particles contained in the upper layer is greater than or equal to 2.0 $m^2$/g and less than or equal to 4.0 $m^2$/g, and an average thickness of the upper layer is less than or equal to 5% of an average thickness of the mixture layer.

A secondary battery according to the present disclosure comprises: the above negative electrode; a positive electrode; and an electrolyte.

ADVANTAGEOUS EFFECT OF INVENTION

According to the negative electrode of the present disclosure, the secondary battery having high energy density and excellent quick-charging ability may be achieved.

BRIEF DESCRIPTION OF DRAWINGS

FIG. 1 is a sectional view of a secondary battery of an example of an embodiment.
FIG. 2 is a sectional view of a negative electrode of an example of an embodiment.

DESCRIPTION OF EMBODIMENTS

The present inventors have made intensive investigation to achieve both of high energy density and excellent quick-charging ability of the secondary battery, and consequently found that the quick-charging ability is remarkably improved while inhibiting a decrease in the energy density by thinly forming an upper layer on a surface of a negative electrode mixture layer, the upper layer being constituted by using: graphite having a median diameter (hereinafter, referred to as "D50") on a volumetric basis of greater than or equal to 4 $\mu$m and less than or equal to 10 $\mu$m; graphite having a BET specific surface area of greater than or equal to 2.0 m$^2$/g and less than or equal to 4.0 m$^2$/g; or graphite having both D50 and a BET specific surface area within the above ranges.

To achieve quick charge of the secondary battery, internal resistance of the battery is needed to be reduced, and an electrolyte liquid is essentially transferred smoothly from the negative electrode surface toward an inside thereof. According to the negative electrode of the present disclosure, it is considered that permeation of the electrolyte liquid toward the inside of the negative electrode is remarkably improved by an effect of the upper layer. In addition, a thickness of the upper layer is extremely small relative to an entire thickness of the negative electrode mixture layer, and thereby the upper layer substantially does not affect the energy density of the battery. The energy density of the battery may be improved without impairing the quick-charging ability by adding a silicon compound into the negative electrode mixture layer.

When the upper layer is formed by using graphite having D50 and a BET specific surface area within the above ranges, it is considered that a frictional force between the graphite particles generates an appropriate space between the particles, and this space improves the permeation of the electrolyte liquid. The present inventors have ascertained that the quick-charging ability is improved remarkably once permeation of the electrolyte liquid in the negative electrode is achieved. That is, to achieve both of high energy density and excellent quick-charging ability, it is important to form the specific upper layer on the surface of the mixture layer, with a thickness of less than or equal to 5% of the thickness of the mixture layer.

Hereinafter, an example of an embodiment of the secondary battery according to the present disclosure will be described in detail with reference to Drawings. Note that, the present disclosure includes selectively combining a plurality of embodiments and modified examples described below.

Hereinafter, a secondary battery 10 being a cylindrical battery in which a wound electrode assembly 14 is housed in a bottomed cylindrical exterior housing can 16 will be exemplified as a secondary battery of an example of an embodiment, but the exterior of the battery is not limited to a cylindrical exterior housing can. The exterior of the battery may be, for example, a rectangular exterior housing can, a coin-shaped exterior housing can, or an exterior composed of laminated sheets including a metal layer and a resin layer. That is, the secondary battery according to the present disclosure may be a rectangular battery, a coin-shaped battery, or a laminated battery. The electrode assembly may be a stacked electrode assembly in which a plurality of positive electrodes and a plurality of negative electrodes are alternately stacked with a separator interposed therebetween.

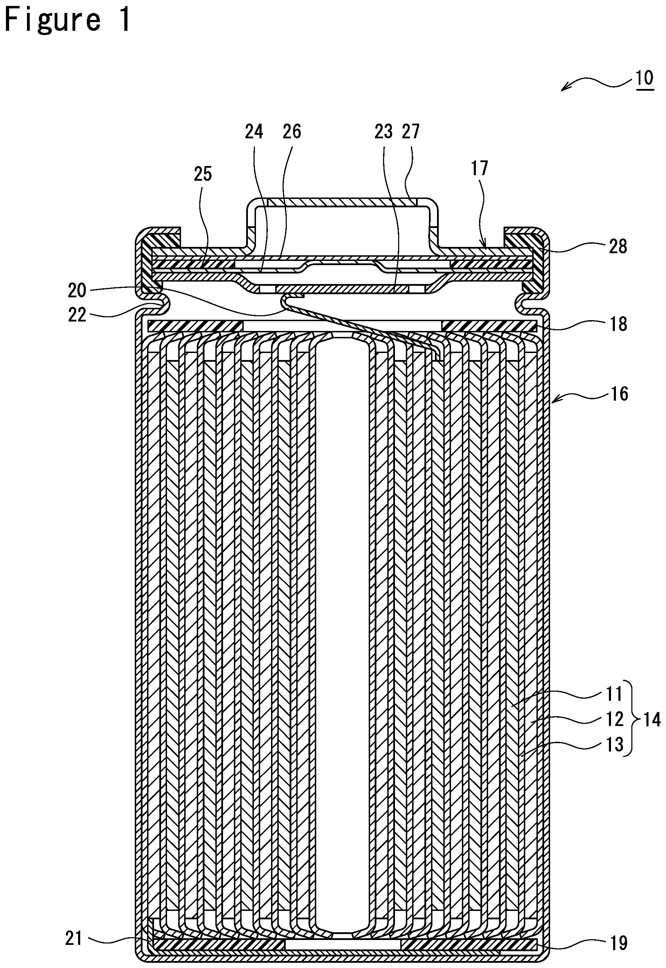

FIG. 1 is a view schematically illustrating a cross section of a secondary battery 10 of an example of an embodiment. As illustrated in FIG. 1, the secondary battery 10 comprises the wound electrode assembly 14, an electrolyte (not illustrated), and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

Although the electrolyte may be an aqueous electrolyte, the present embodiment uses a non-aqueous electrolyte. The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen element such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as $LiPF_6$ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the secondary battery 10, specifically the negative electrode 12, will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core except for a core exposed portion to which a positive electrode lead is to be connected. A thickness of the positive electrode mixture layer is, for example, greater than or equal to 50 $\mu$m and less than or equal to 200 $\mu$m on one side of the positive electrode core. The positive electrode 11 may be produced by applying a positive electrode mixture slurry including the positive electrode active material, the conductive agent, the binder, and the like on the surface of the positive electrode core, and drying and subsequently compressing the coating to form the positive electrode mixture layers on both the surfaces of the positive electrode core.

The positive electrode active material is constituted with a lithium-transition metal composite oxide as a main component. Examples of an element contained in the lithium-transition metal composite oxide and excluding Li include Ni, Co, Mn, Al, B, Mg, Ti, V, Cr, Fe, Cu, Zn, Ga, Sr, Zr, Nb, In, Sn, Ta, W, Si, and P. An example of the preferable lithium-transition metal composite oxide is a composite oxide containing at least one of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer include a carbon material such as carbon black, acetylene black, Ketjenblack, and graphite. Examples of the binder included in the positive electrode mixture layer include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethylcellulose (CMC) or a salt thereof, polyethylene oxide (PEO), and the like may be used in combination.

[Negative Electrode]

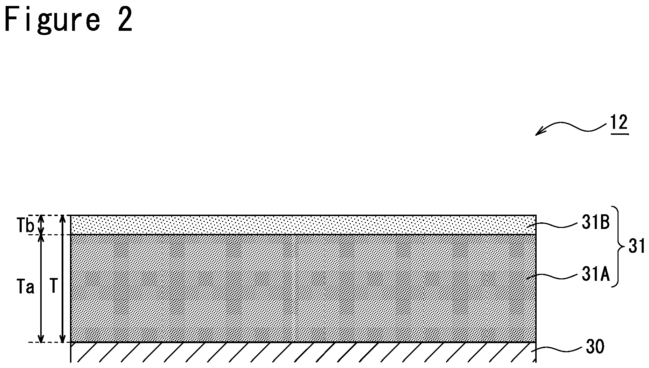

FIG. 2 is a view schematically illustrating a part of a cross section of the negative electrode 12. As illustrated in FIG. 2, the negative electrode 12 has a negative electrode core 30 and a negative electrode mixture layer 31 formed on the negative electrode core 30. For the negative electrode core 30, a foil of a metal stable within a potential range of the negative electrode 12, such as copper and a copper alloy, a film in which such a metal is disposed on a surface layer thereof, and the like may be used. A thickness of the negative electrode core 30 is, for example, greater than or equal to 5 $\mu$m and less than or equal to 20 $\mu$m. The negative electrode mixture layer 31 includes a negative electrode active material and a binder, and preferably provided on both surfaces of the negative electrode core 30 except for a core exposed portion, a portion to which a negative electrode lead is to be connected. A thickness of the negative electrode mixture layer 31 is, for example, greater than or equal to 30 $\mu$m and less than or equal to 200 $\mu$m on one side of the negative electrode core 30.

The negative electrode mixture layer 31 contains graphite particles as the negative electrode active material. The negative electrode mixture layer 31 has a lower layer 31A that is disposed on a side of the negative electrode core 30 of the mixture layer, and an upper layer 31B that is disposed on a surface of the mixture layer. A median diameter (D50) on a volumetric basis of the graphite particles contained in the lower layer 31A is greater than 10 $\mu$m, and D50 of the graphite particles contained in the upper layer 31B is greater than or equal to 4 $\mu$m and less than or equal to 10 $\mu$m. A BET specific surface area of the graphite particles contained in the lower layer 31A is greater than 4.0 m$^2$/g, and a BET specific surface area of the graphite particles contained in the upper layer 31B is greater than or equal to 2.0 m$^2$/g and less than or equal to 4.0 m$^2$/g.

When at least one of the D50 and the BET specific surface area of the graphite particles contained in the lower layer 31A and the upper layer 31B is within the above range, the secondary battery 10 having high energy density and excellent quick-charging ability can be achieved provided that the thickness of the upper layer 31B or the like is regulated appropriately. In the present embodiment, the lower layer 31A and the upper layer 31B are formed by using graphite particles having both the D50 and the BET specific surface area within the above ranges. In this case, the effect of improving the energy density and the quick-charging ability becomes more remarkable.

The negative electrode mixture layer 31 has a bilayer structure constituted with the lower layer 31A and the upper layer 31B. The upper layer 31B is positioned on the outermost surface of the negative electrode mixture layer 31, and formed directly on the lower layer 31A. The lower layer 31A is formed directly on the surface of the negative electrode core 30. The upper layer 31B is preferably formed on an entire region of the lower layer 31A. Note that the negative electrode mixture layer 31 may have a third layer within a range not impairing the object of the present disclosure. For example, the third layer may be formed between the lower layer 31A and the negative electrode core 30. In addition, a layer not containing the negative electrode active material may be formed between the negative electrode mixture layer 31 and the negative electrode core 30.

Both of the lower layer 31A and the upper layer 31B contain the graphite particles and the binder. The graphite particles may be natural graphite such as spherical graphite and flake graphite, artificial graphite such as massive artificial graphite and graphitized mesophase-carbon microbead, or a mixture thereof, and the type is not particularly limited. As an example, the graphite particles in the lower layer 31A are natural graphite, and the graphite particles in the upper layer 31B are artificial graphite. A content of the graphite particles is preferably greater than or equal to 90 mass% and less than or equal to 99.9 mass%, and more preferably greater than or equal to 93 mass% and less than or equal to 99 mass% relative to a mass of the negative electrode mixture layer 31. The content rates of the graphite particles may be substantially same in the lower layer 31A and the upper layer 31B.

For the binder included in the lower layer 31A and the upper layer 31B, a fluororesin, PAN, a polyimide, an acrylic resin, a polyolefin, and the like may be used as in the case of the positive electrode 11, but styrene-butadiene rubber (SBR) is preferably used. The negative electrode mixture layer 31 may further include CMC or a salt thereof, polyacrylic acid (PAA) or a salt thereof, polyvinyl alcohol (PVA), and the like. For the negative electrode mixture layer 31, SBR; and CMC or a salt thereof are preferably used in combination. Content rates of the binder are, for example, greater than or equal to 0.1 mass% and less than or equal to 10 mass%, or greater than or equal to 0.5 mass% and less than or equal to 5 mass% relative to the mass of the negative electrode mixture layer 31, and are substantially the same in the lower layer 31A and the upper layer 31B.

The negative electrode mixture layer 31 may contain a silicon compound as the negative electrode active material. Examples of the silicon compound include: a compound in which Si fine particles are dispersed in a silicon oxide layer and represented by $SiO_x$ ($0.5 \leq x \leq 2.0$); a compound in which Si fine particles are dispersed in a lithium silicate phase; and a compound in which Si fine particles are dispersed in a carbon phase. On particle surfaces of the silicon compound, a conductive film such as a carbon coating film is formed.

A content of the silicon compound is, for example, greater than or equal to 2 mass%, and preferably greater than or equal to 2 mass% and less than or equal to 10 mass% relative to the mass of the negative electrode mixture layer 31. Adding greater than or equal to 2 mass% of the silicon compound effectively improves the energy density of the secondary battery 10. The silicon compound may be contained in only one of the lower layer 31A and the upper layer 31B, or may be contained in both of them. The silicon compound is preferably contained in at least the lower layer 31A.

An average thickness Tb of the upper layer 31B is less than or equal to 5% of an average thickness T of the negative electrode mixture layer 31. The upper layer 31B plays a role of promoting permeation of the electrolyte liquid toward the negative electrode mixture layer 31, and sufficiently exhibits this function with extremely thin formation on the surface of the negative electrode mixture layer 31. The upper layer 31B is considered to have a large volume of space formed between the graphite particles per unit volume compared with the lower layer 31A, and enables smooth permeation of the electrolyte liquid. Meanwhile, if the average thickness Tb exceeds 5% of the average thickness T, the energy density of the secondary battery 10 considerably decreases. When the negative electrode mixture layer 31 has the bilayer structure, an average thickness Ta of the lower layer 31A is greater than or equal to 95% of the average thickness T of the negative electrode mixture layer 31.

The average thicknesses T, Ta, and Tb may be determined with a scanning electron microscope (SEM) image of a cross section of the negative electrode mixture layer 31. A specific calculation method of the average thickness Tb is as follows.

(1) The cross-sectional SEM image of the negative electrode mixture layer 31 is subjected to an image processing to distinguish the lower layer 31A and the upper layer 31B. In this time, a region from a straight line along the outermost surface of the negative electrode mixture layer 31 to a straight line along the outermost surface of the lower layer 31A is distinguished as the upper layer 31B. Since most particles constituting the upper layer 31B are packed between the particles constituting the lower layer 31A, the average thickness Tb is typically a value smaller than D50 of the particles constituting the upper layer 31B.

(2) An area of the distinguished lower layer 31A, an area of the upper layer 31B, and an entire area of the negative electrode mixture layer 31 are obtained. In addition, a thickness of the negative electrode mixture layer 31 is obtained from the SEM image.

(3) The average thickness Tb of the upper layer 31B is calculated with the following formulae.

Area of upper layer 31B / Entire area of negative electrode mixture layer 31 = Area ratio of upper layer 31B Area ratio of upper layer 31B * Thickness of negative electrode mixture layer 31 = Thickness of upper layer 31B

The average thickness Ta can be calculated similarly to Tb.

The average thickness Tb of the upper layer 31B is preferably greater than or equal to 1% of the average thickness T of the negative electrode mixture layer 31. Although the average thickness Tb of less than 1% of the average thickness T improves the permeation of the electrolyte liquid, regulating the average thickness Tb within greater than or equal to 1% and less than or equal to 5% of the average thickness T yields more remarkable effect of improving the energy density and the quick-charging ability. An example of a preferable average thickness Tb is greater than or equal to 4 $\mu$m and less than or equal to 10 $\mu$m. The average thickness Ta of the lower layer 31A is greater than or equal to 95% and less than or equal to 99% of the average thickness T of the negative electrode mixture layer 31. A thickness ratio between the lower layer 31A and the upper layer 31B is preferably substantially same on both sides of the negative electrode core 30 from the viewpoints of uniformizing the battery reaction and the like.

The D50 of the graphite particles contained in the upper layer 31B (hereinafter, which may be referred to as "graphite particles (B)") is preferably greater than or equal to 4 $\mu$m and less than or equal to 10 $\mu$m, as noted above. The D50 of the graphite particles contained in the lower layer 31A (hereinafter, which may be referred to as "graphite particles (A)") is greater than the D50 of the graphite particles (B), preferably greater than or equal to 15 $\mu$m and less than or equal to 30 $\mu$m, and more preferably greater than or equal to 25 $\mu$m and less than or equal to 30 $\mu$m. With D50 of each of the graphite particles within the above range, the secondary battery 10 having high energy density and excellent quick-charging ability can be achieved. With D50 of the graphite particles (B) greater than or equal to 4 $\mu$m and less than or equal to 10 $\mu$m,

preferable particle space to promote the permeation of the electrolyte liquid is formed in the upper layer 31B. The lower layer 31A has high filling density of the particles, and contributes to the increase in the energy density.

The D50 of the graphite particles means a particle diameter at which a cumulative frequency is 50% from a smaller particle diameter side in a particle size distribution on a volumetric basis, and is also referred to as a median diameter. The particle size distribution of the graphite particles is determined by measuring diameters of circumscribed circles of the particles with the cross-sectional SEM image of the negative electrode mixture layer 31. When the particle size distribution of the powder of the graphite particles to be added into the negative electrode mixture layer 31 is measured by using a laser diffraction-type particle size distribution measuring device (for example, MT3000II, manufactured by MicrotracBEL Corp.), a value similar to the particle size distribution determined from the cross-sectional SEM image is obtained.

Note that, as long as the D50 of each of the graphite particles contained in the lower layer 31A and the upper layer 31B is within the above range, each of the graphite particles may be a mixture of greater than or equal to two types of graphite particles having D50 different from each other. For example, the graphite particles (B) may be a mixture of artificial graphite and natural graphite.

The BET specific surface area of the graphite particles (B) is preferably greater than or equal to 2.0 $m^2/g$ and less than or equal to 4.0 $m^2/g$, as noted above. The BET specific surface area of the graphite particles (A) is greater than the BET specific surface area of the graphite particles (B), and preferably greater than 4.0 $m^2/g$ and less than or equal to 4.5 $m^2/g$. When the BET specific surface area of each of the graphite particles is within the above range, the secondary battery 10 having high energy density and excellent quick-charging ability may be achieved. When the BET specific surface area of the graphite particles (B) is greater than or equal to 2.0 $m^2/g$ and less than or equal to 4.0 $m^2/g$, preferable particle space to promote the permeation of the electrolyte liquid is formed in the upper layer 31B. The BET specific surface area of the graphite particle is measured in accordance with a BET method (nitrogen adsorption method) described in JIS R1626.

The negative electrode mixture layer 31 may be formed by using: a first negative electrode mixture slurry including the graphite particles having D50 of greater than or equal to 4 $\mu$m and less than or equal to 10 $\mu$m and a BET specific surface area of greater than or equal to 2.0 $m^2/g$ and less than or equal to 4.0 $m^2/g$; and a second negative electrode mixture slurry including the graphite particles having D50 of greater than or equal to 15 $\mu$m and less than or equal to 30 $\mu$m and a BET specific surface area of greater than 4.0 $m^2/g$ and less than or equal to 4.5 $m^2/g$, for example. The negative electrode 12 comprising the negative electrode mixture layer 31 with the bilayer structure may be manufactured by: applying the second negative electrode mixture slurry on a surface of the negative electrode core 30 and drying the coating of the first layer; then applying the first negative electrode mixture slurry on this coating and drying the coating of the second layer; and collectively compressing the two layers with a roller.

[Separator]

For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene, polypropylene, and a copolymer of ethylene and an $\alpha$-olefin, cellulose, and the like are preferable. The separator 13 may have any of a single layer structure and a stacked structure. On a surface of the separator 13, a heat-resistant layer including inorganic particles, a heat-resistant layer constituted with a highly heat-resistant resin such as an aramid resin, a polyimide, and a polyamide imide, and the like may be formed.

EXAMPLES

Hereinafter, the present disclosure will be further described with Examples, but the present disclosure is not limited to these Examples.

<Example 1>

[Preparation of First Negative Electrode Mixture Slurry (Slurry for Forming Upper Layer)]

As a negative electrode active material, graphite (1) having D50 of 10 $\mu$m and a BET specific surface area of 3.8 $m^2/g$ was used. The negative electrode active material, a dispersion of styrene-butadiene rubber (SBR), and sodium carboxymethylcellulose (CMC-Na) were mixed at a solid content mass ratio of 100: 1: 1, and an appropriate amount of water was added to prepare a first negative electrode mixture slurry. The D50 was a value measured by using a laser diffraction-type particle size distribution measuring device (MT3000II, manufactured by MicrotracBEL Corp.).

[Preparation of Second Negative Electrode Mixture Slurry (Slurry for Forming Lower Layer)]

As a negative electrode active material, graphite (2) having D50 of 28 $\mu$m and a BET specific surface area of 4.2 m$^2$/g was used. The negative electrode active material, a dispersion of SBR, and CMC-Na were mixed at a solid content mass ratio of 100: 1: 1, and an appropriate amount of water was added to prepare a second negative electrode mixture slurry.

[Production of Negative Electrode]

By a doctor blade method, the second negative electrode mixture slurry was applied on one surface of a negative electrode core made of copper foil with 8 $\mu$m in thickness, the coating was dried, then the first negative electrode mixture slurry was applied on this coating, and the coating was dried to form a coating having a bilayer structure of the upper layer / the lower layer. In this time, amounts of each mixture slurry applied were regulated so that average thicknesses of the upper layer and lower layer were 5:95. On the other surface of the negative electrode core, a coating having the bilayer structure was formed in the same manner. The coatings having the bilayer structure were compressed by using a roller, and the negative electrode core was cut to a predetermined size to produce a negative electrode in which the negative electrode mixture layers were formed on both the surfaces of the negative electrode core. Note that, a thickness of the negative electrode mixture layer was approximately 80 $\mu$m on one side of the negative electrode core.

[Production of Positive Electrode]

As a positive electrode active material, a lithium-nickel-cobalt-aluminum composite oxide was used. The positive electrode active material, acetylene black, and polyvinylidene fluoride were mixed at a solid-content mass ratio of 98:1:1, and an appropriate amount of N-methyl-2-pyrrolidone was added to prepare a positive electrode mixture slurry. This positive electrode mixture slurry was applied on both surfaces of a positive electrode core made of aluminum foil by a doctor blade method, the coating was dried, and then compressed by using a roller. The positive electrode core was cut to a predetermined size to obtain a positive electrode in which positive electrode mixture layers were formed on both the surfaces of the positive electrode core.

[Preparation of Non-Aqueous Electrolyte]

Into 100 parts by mass of a mixed solvent in which ethylene carbonate (EC) and dimethyl carbonate (DMC) were mixed at a volume ratio of 1:3, 5 parts by mass of vinylene carbonate (VC) was added, and LiPF$_6$ was dissolved at a concentration of 1 mol/L to prepare a non-aqueous electrolyte.

[Production of Non-Aqueous Electrolyte Secondary Battery]

A positive electrode lead was attached to the positive electrode core, a negative electrode lead was attached to the negative electrode core, and the positive electrode and the negative electrode were spirally wound with a separator interposed therebetween to produce a wound electrode assembly. An insulating plate was disposed on each of upper and lower sides of the electrode assembly, the negative electrode lead was welded with an inner bottom face of a bottomed cylindrical exterior housing can, the positive electrode lead was welded with a sealing assembly, and the electrode assembly was housed in the exterior housing can. The non-aqueous electrolyte was injected into the exterior housing can, and then an opening of the exterior housing can was sealed with the sealing assembly via a gasket to obtain a non-aqueous electrolyte secondary battery A1.

<Example 2>

A negative electrode was produced, and a non-aqueous electrolyte secondary battery A2 comprising this negative electrode was produced in the same manner as in Example 1 except that: in the preparation of the first negative electrode mixture slurry, graphite (3) having D50 of 5 $\mu$m and a BET specific surface area of 3.0 m$^2$/g was used instead of the graphite (1); and the thickness ratio between the upper layer and the lower layer was 1:99.

<Example 3>

A negative electrode was produced, and a non-aqueous electrolyte secondary battery A3 comprising this negative electrode was produced in the same manner as in Example 2 except that in the preparation of the first negative electrode mixture slurry, graphite (4) having D50 of 5 $\mu$m and a BET specific surface area of 2.1 m$^2$/g was used instead of the graphite (3).

<Example 4>

A negative electrode was produced, and a non-aqueous electrolyte secondary battery A4 comprising this negative electrode was produced in the same manner as in Example 3 except that a silicon material represented by $SiO_x$ was added at 2 mass% relative to a mass of the negative electrode active material.

<Comparative Example 1>

A negative electrode was produced, and a non-aqueous electrolyte secondary battery B1 comprising this negative electrode was produced in the same manner as in Example 1 except that a negative electrode mixture layer having a thickness same as that of the negative electrode of Example 1 was formed by using only the second negative electrode mixture slurry.

<Comparative Example 2>

A negative electrode was produced, and a non-aqueous electrolyte secondary battery B2 comprising this negative electrode was produced in the same manner as in Example 1 except that the thickness ratio between the upper layer and the lower layer was 95:5.

<Comparative Example 3>

A negative electrode was produced, and a non-aqueous electrolyte secondary battery B3 comprising this negative electrode was produced in the same manner as in Example 3 except that the thickness ratio between the upper layer and the lower layer was 10:95.
On each of the secondary batteries of Examples and Comparative Examples, energy density and high-rate charge-discharge capacity were evaluated by the following method, and the evaluation results are shown in Table 1 together with the constitution of the negative electrode. The evaluation results shown in Table 1 are values relative to the results of the secondary battery of Comparative Example 1 being 1.

[Evaluation of Energy Density]

Each of the secondary batteries was discharged at a constant current until a battery voltage reached 3.0 V, then subsequently discharged at a constant voltage until a current value reached 0.05 C. Then, after a rest, the battery was charged at a constant current of 0.3 C until the battery voltage reached 4.2 V, and then charged at a constant voltage until the current value reached 0.05 C. Using a charge capacity obtained in this time, the energy density was calculated with the following formula. The nominal voltage was 3.7 V.

Energy density = (Nominal voltage [V] × Charge capacity [Ah]) / Volume of battery [L]

The results are shown in Table 1 as values relative to a value of Comparative Example 1 being a reference.

[Evaluation of High-Rate Charge-Discharge Capacity]

Each of the secondary batteries was discharged at a constant current until a battery voltage reached 3.0 V, then subsequently discharged at a constant voltage until a current value reached 0.05 C. Then, after a rest, the battery was quickly charged at a constant current of 0.7 C until the battery voltage reached 4.2 V. Furthermore, after a rest, the battery was discharged at a constant current of 1.0 C under a terminal condition of 2.5 V. Using a discharge capacity obtained in this time, the high-rate charge-discharge capacity was calculated with the following formula.

$$High\text{-}rate\ charge\text{-}discharge\ capacity = Discharge\ capacity\ [Ah]$$

The high-rate charge-discharge capacity is evaluated by using only the discharge capacity because the discharge capacity cannot be larger than the charge-discharge capacity (a low charge capacity necessarily lowers the discharge capacity). The results are shown in Table 1 as values relative to a value of Comparative Example B1 being a reference.

[Table 1]

| | B1 | B2 | B3 | A1 | A2 | A3 | A4 |
|---|---|---|---|---|---|---|---|
| <Negative electrode> | | | | | | | |
| Thickness of upper layer (%) | 50 | 95 | 10 | 5 | 1 | 1 | 1 |
| Thickness of lower layer (%) | 50 | 5 | 90 | 95 | 99 | 99 | 99 |
| D50 of graphite in upper layer ($\mu$m) | 28 | 10 | 10 | 10 | 5 | 5 | 5 |
| D50 of graphite in lower layer ($\mu$m) | 28 | 28 | 28 | 28 | 28 | 28 | 28 |
| BET of graphite in upper layer ($m^2$/g) | 4.2 | 3.8 | 2.1 | 3.8 | 3.0 | 2.1 | 2.1 |
| BET of graphite in lower layer ($m^2$/g) | 4.2 | 4.2 | 4.2 | 4.2 | 4.2 | 4.2 | 4.2 |
| Content of Si compound (mass%) | 0 | 0 | 0 | 0 | 0 | 0 | 2 |
| <Battery performance> | | | | | | | |
| Energy density | 1 | 0.934 | 0.993 | 0.997 | 0.999 | 0.999 | 1.060 |
| High-rate charge-discharge capacity | 1 | 1.20 | 1.00 | 1.05 | 1.10 | 1.10 | 1.10 |

As shown in Table 1, all of the secondary batteries of Examples have energy density equivalent to that of the secondary batteries of Comparative Examples 1 and 3, and have high high-rate charge-discharge capacity. That is, both of high energy density and excellent quick-charging ability of the secondary battery can be achieved by using the negative electrodes of Examples. The secondary battery of Comparative Example 2 has excellent quick-charging ability compared with the other secondary batteries, but has considerably decreased energy density.

As described above, it is understood that the quick-charging ability of the battery is remarkably improved by thinly forming the upper layer on the surface of the negative electrode mixture layer, the upper layer being constituted by using graphite having D50 of greater than or equal to 4 $\mu$m and less than or equal to 10 $\mu$m and a BET specific surface area of greater than or equal to 2.0 $m^2$/g and less than or equal to 4.0 $m^2$/g. In addition, the thickness of the upper layer is less than or equal to 5% of the entire thickness of the mixture layer, and thereby the presence of the upper layer substantially does not affect the energy density of the battery. Both of high energy density and excellent quick-charging ability can be achieved when the upper layer is formed by using graphite having one of D50 and a BET specific surface area being out of the above range; however, the effect is more remarkable when the graphite having both of D50 and a BET specific surface area within the above ranges is used, as in the Examples.

Note that, as understood from Comparative Example 3, the effect of improving the quick-charging ability hits its peak with the formation of the upper layer having a thickness of greater than 5% of the thickness of the mixture layer. When the upper layer is significantly thickly formed as in Comparative Example 2, the quick-charging ability is improved but the energy density considerably decreases.

REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode core, 31 Negative electrode mixture layer, 31A Lower layer, 31B Upper layer

**Claims**

1.    A negative electrode (12) for a secondary battery (10), comprising:

a core (30); and
a mixture layer (31) provided on the core (30), wherein
the mixture layer (31) contains graphite particles, and has a lower layer (31A) that is disposed on a side of the core (30) of the mixture layer (31), and an upper layer (31B) that is disposed on a surface of the mixture layer (31),
a median diameter on a volumetric basis of the graphite particles contained in the lower layer (31A) is greater than

10 μm,

a BET specific surface area of the graphite particles contained in the lower layer (31A) is greater than 4.0 m$^2$/g,

a median diameter on a volumetric basis of the graphite particles contained in the upper layer (31B) is greater than or equal to 4 μm and less than or equal to 10 μm,

a BET specific surface area of the graphite particles contained in the upper layer (31B) is greater than or equal to 2.0 m$^2$/g and less than or equal to 4.0 m$^2$/g,

an average thickness of the upper layer (31B) is less than or equal to 5% of an average thickness of the mixture layer (31), and

an average thickness of the upper layer (31B) is less than or equal to 5% of an average thickness of the mixture layer (31),

when the median diameter on a volumetric basis of the graphite particles is measured as indicated in the description.

2. The negative electrode (12) for a secondary battery (10) according to claim 1, wherein the average thickness of the upper layer (31B) is greater than or equal to 1% of the average thickness of the mixture layer (31).

3. The negative electrode (12) for a secondary battery (10) according to claim 1 or 2, wherein a median diameter on a volumetric basis of the graphite particles contained in the lower layer (31A) is greater than or equal to 15 μm and less than or equal to 30 μm.

4. The negative electrode (12) for a secondary battery (10) according to any one of claims 1 to 3, wherein a BET specific surface area of the graphite particles contained in the lower layer (31A) is greater than 4.0 m$^2$/g and less than or equal to 4.5 m$^2$/g.

5. The negative electrode (12) for a secondary battery (10) according to any one of claims 1 to 4, wherein the mixture layer (31) contains greater than or equal to 2 mass% of a silicon compound.

6. A secondary battery (10), comprising:

   the negative electrode (12) according to any one of claims 1 to 5;
   a positive electrode (11); and
   an electrolyte.


**Patentansprüche**

1. Negativelektrode (12) für Sekundärbatterie (10), umfassend:

   einen Kern (30); und
   eine Gemischschicht (31), die auf dem Kern (30) bereitgestellt ist, wobei
   die Gemischschicht (31) Graphitpartikel enthält und eine untere Schicht (31A), die auf einer Seite des Kerns (30) der Gemischschicht (31) angeordnet ist, und eine obere Schicht (31B) aufweist, die auf einer Oberfläche der Gemischschicht (31) angeordnet ist,
   ein mittlerer Durchmesser, bezogen auf ein Volumen, der Graphitpartikel, die in der unteren Schicht (31A) enthalten sind, größer als 10 μm ist,
   eine BET-spezifische Oberfläche der Graphitpartikel, die in der unteren Schicht (31A) enthalten sind, größer als 4,0 m$^2$/g ist,
   ein mittlerer Durchmesser, bezogen auf ein Volumen, der Graphitpartikel, die in der oberen Schicht (31B) enthalten sind, größer als oder gleich 4 μm und kleiner oder gleich 10 μm ist,
   eine BET-spezifische Oberfläche der Graphitpartikel, die in der oberen Schicht (31B) enthalten sind, größer oder gleich 2,0 m$^2$/g und kleiner oder gleich 4,0 m$^2$/g ist,
   eine durchschnittliche Dicke der oberen Schicht (31B) kleiner oder gleich 5 % einer durchschnittlichen Dicke der Gemischschicht (31) ist, und
   eine durchschnittliche Dicke der oberen Schicht (31B) kleiner oder gleich 5 % einer durchschnittlichen Dicke der Gemischschicht (31) ist,
   wenn der mittlere Durchmesser, bezogen auf ein Volumen, der Graphitpartikel gemessen wird wie in der Beschreibung angegeben.

**2.** Negativelektrode (12) für eine Sekundärbatterie (10) nach Anspruch 1, wobei die durchschnittliche Dicke der oberen Schicht (31B) größer oder gleich 1 % der durchschnittliche Dicke der Gemischschicht (31) ist.

**3.** Negativelektrode (12) für eine Sekundärbatterie (10) nach Anspruch 1 oder 2, wobei ein mittlerer Durchmesser, bezogen auf ein Volumen, der Graphitpartikel, die in der unteren Schicht (31A) enthalten sind, größer oder gleich 15 μm und kleiner oder gleich 30 μm ist.

**4.** Negativelektrode (12) für eine Sekundärbatterie (10) nach einem der Ansprüche 1 bis 3, wobei eine BET-spezifische Oberfläche der Graphitpartikel, die in der unteren Schicht (31A) enthalten sind, größer oder gleich 4,0 m$^2$/g und kleiner oder gleich 4,5 m$^2$/g ist.

**5.** Negativelektrode (12) für eine Sekundärbatterie (10) nach einem der Ansprüche 1 bis 4, wobei die Gemischschicht (31) größer oder gleich 2 Massen-% einer Siliziumverbindung enthält.

**6.** Sekundärbatterie (10), umfassend:

eine Negativelektrode (12) nach einem der Ansprüche 1 bis 5;
eine Positivelektrode (11); und
einen Elektrolyten.

**Revendications**

**1.** Électrode négative (12) pour une batterie rechargeable (10), comprenant :

un noyau (30) ; et
une couche de mélange (31) disposée sur le noyau (30),
dans laquelle
la couche de mélange (31) contient des particules de graphite, et a une couche inférieure (31A) qui est disposée sur un côté du noyau (30) de la couche de mélange (31), et une couche supérieure (31B) qui est disposée sur une surface de la couche de mélange (31),
le diamètre médian sur une base volumétrique des particules de graphite contenues dans la couche inférieure (31A) est supérieur à 10 μm,
la surface spécifique BET des particules de graphite contenues dans la couche inférieure (31A) est supérieure à 4,0 m$^2$/g,
le diamètre médian sur une base volumétrique des particules de graphite contenues dans la couche supérieure (31B) est supérieur ou égal à 4 μm et inférieur ou égal à 10 μm,
la surface spécifique BET des particules de graphite contenues dans la couche supérieure (31B) est supérieure ou égale à 2,0 m$^2$/g et inférieure ou égale à 4,0 m$^2$/g,
l'épaisseur moyenne de la couche supérieure (31B) est inférieure ou égale à 5 % de l'épaisseur moyenne de la couche de mélange (31), et
l'épaisseur moyenne de la couche supérieure (31B) est inférieure ou égale à 5 % de l'épaisseur moyenne de la couche de mélange (31),
quand le diamètre médian sur une base volumétrique des particules de graphite est mesuré comme indiqué dans la description.

**2.** Électrode négative (12) pour une batterie rechargeable (10) selon la revendication 1, dans laquelle l'épaisseur moyenne de la couche supérieure (31B) est supérieure ou égale à 1 % de l'épaisseur moyenne de la couche de mélange (31).

**3.** Électrode négative (12) pour une batterie rechargeable (10) selon la revendication 1 ou 2, dans laquelle le diamètre médian sur une base volumétrique des particules de graphite contenues dans la couche inférieure (31A) est supérieur ou égal à 15 μm et inférieur ou égal à 30 μm.

**4.** Électrode négative (12) pour une batterie rechargeable (10) selon l'une quelconque des revendications 1 à 3, dans laquelle la surface spécifique BET des particules de graphite contenues dans la couche inférieure (31A) est supérieure à 4,0 m$^2$/g et inférieure ou égale à 4,5 m$^2$/g.

5. Électrode négative (12) pour une batterie rechargeable (10) selon l'une quelconque des revendications 1 à 4, dans laquelle la couche de mélange (31) contient 2 % en masse ou plus d'un composé du silicium.

6. Batterie rechargeable (10), comprenant :

   l'électrode négative (12) selon l'une quelconque des revendications 1 à 5 ;
   une électrode positive (11) ; et
   un électrolyte.

# Figure 1

# Figure 2

**EP 4 398 332 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015146272 A
- WO 2013018182 A
- WO 2020218083 A
- WO 2020213499 A